# EUROPEAN PATENT APPLICATION

(11) **EP 4 560 434 A1**
(43) Date of publication of application: **28.05.2025**
(21) Application number: 24214018.4
(22) Date of filing: 19.11.2024
(51) Int. Cl.: G06F 1/16

(54) **COMPUTING DEVICE**

(30) Priority: 23.11.2023 US 202318518542
(71) Applicant: Lenovo (Singapore) Pte. Ltd, New Tech Park 556741 (SG)
(72) Inventor: ROSE, Alden, Durham, 27707 (US); FULFAGAR, Dhruvi Suresh, Raleigh (US)
(74) Representative: Openshaw & Co.

(57) **Abstract**

A computing device can include a processor; memory accessible to the processor; a display housing assembly that includes a display panel and display housing hinge mount features; a keyboard housing assembly that includes a keyboard, keyboard housing hinge mount features, and one or more tool access panels; and a hinge assembly that rotatably couples the display housing assembly and the keyboard housing assembly via the display housing hinge mount features, the keyboard housing hinge mount features, and one or more fasteners, where the display housing assembly is attachable to and detachable from the keyboard housing assembly via opening of the one or more tool access panels for tool-based access to and operation of the one or more fasteners.

## Description

### TECHNICAL FIELD

Subject matter disclosed herein generally relates to technology for computing devices.

### BACKGROUND

A computing device can include a display housing assembly and a keyboard housing assembly that are coupled via one or more hinge assemblies. For example, a laptop computing device (e.g., a laptop computer) can be a clamshell device with such housing assemblies.

### SUMMARY

A computing device can include a processor; memory accessible to the processor; a display housing assembly that includes a display panel and display housing hinge mount features; a keyboard housing assembly that includes a keyboard, keyboard housing hinge mount features, and one or more tool access panels; and a hinge assembly that rotatably couples the display housing assembly and the keyboard housing assembly via the display housing hinge mount features, the keyboard housing hinge mount features, and one or more fasteners, where the display housing assembly is attachable to and detachable from the keyboard housing assembly via opening of the one or more tool access panels for tool-based access to and operation of the one or more fasteners. Various other apparatuses, systems, methods, etc., are also disclosed.

### BRIEF DESCRIPTION OF THE DRAWINGS

Features and advantages of the described implementations can be more readily understood by reference to the following description taken in conjunction with examples of the accompanying drawings.
FIG. 1 is a diagram of an example of a computing device;
FIG. 2 is a diagram of an example of a computing device or computing system;
FIG. 3 is a diagram of an example of a display housing assembly of the computing device or computing system of FIG. 2;
FIG. 4 is a diagram of an example of a computing device;
FIG. 5 is a diagram of an example of a keyboard housing assembly;
FIG. 6 is a series of diagrams of example of hinge assemblies;
FIG. 7 is a diagram of an example of a computing device;
FIG. 8 is a diagram of an example of a computing device;
FIG. 9 is a diagram of an example of a display housing assembly;
FIG. 10 is a diagram of an example of a keyboard housing assembly;
FIG. 11 is a diagram of an example of a display housing assembly;
FIG. 12 is a series of diagrams of examples of cables and connectors;
FIG. 13 is a diagram of an example of a method;
FIG. 14 is a diagram of an example of a method; and
FIG. 15 is a diagram of an example of a system that includes one or more processors.

### DETAILED DESCRIPTION

The following description includes the best mode presently contemplated for practicing the described implementations. This description is not to be taken in a limiting sense, but rather is made merely for the purpose of describing general principles of various implementations. The scope of invention should be ascertained with reference to issued claims.

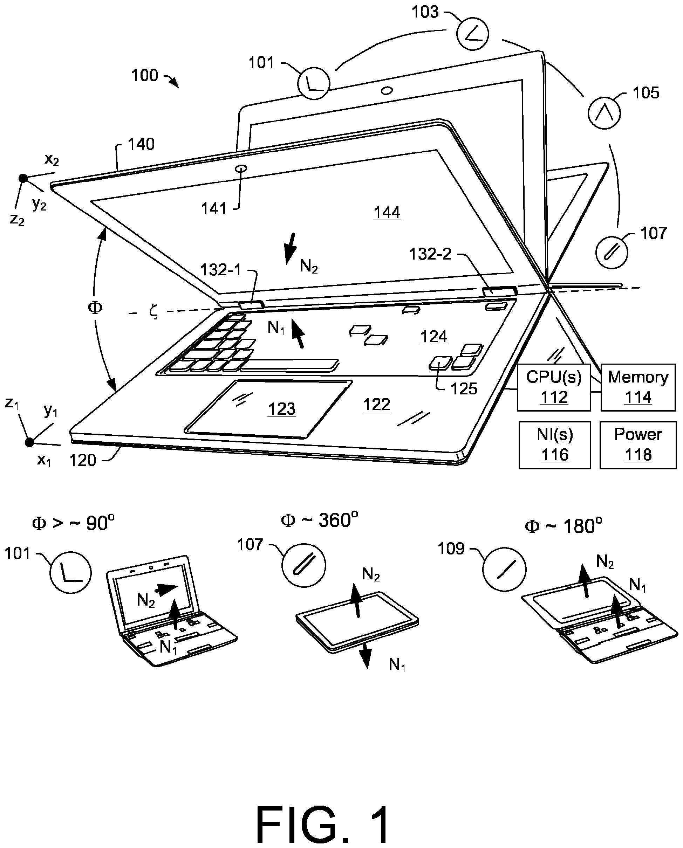

FIG. 1 shows an example of a computing device 100 (e.g., a computing system) that includes a keyboard housing 120 and a display housing 140 that are pivotable with respect to each other via movement about one or more hinges 132-1 and 132-2 (e.g., hinge assemblies). The computing device 100 may be a system such as, for example, a computing system (e.g., an information handling device, etc.).

As an example, the computing device 100 may include one or more processors 112, memory 114 (e.g., one or more memory devices), one or more network interfaces (Nls) 116, and one or more power cells 118. Such components may be, for example, housed within the keyboard housing 120, the display housing 140, or the keyboard housing 120 and the display housing 140.

As shown in the example of FIG. 1, the keyboard housing 120 includes a keyboard 124 with keys 125 and the display housing 140 includes a display 144 and can include a camera 141 mounted in a bezel region of a bezel that surrounds the display 144. In such an example, the keyboard 124 is defined in a first Cartesian coordinate system as having a width along an x-axis (x₁), a depth along a y-axis (y₁) and a height or thickness along a z-axis (z₁) that extends in a direction outwardly away from touch surfaces of keys 125 of the keyboard 124 and the display 144 is defined in a second Cartesian coordinate system as having a width along an x-axis (x₂), a depth along a y-axis (y₂) and a height or thickness along a z-axis (z₂) that extends in a direction outwardly away from a viewing surface of the display 144. As an example, a coordinate system may be right-handed or left-handed.

As shown in the example of FIG. 1, the one or more hinges 132-1 and 132-2 pivotably connect the keyboard housing 120 and the display housing 140 for orienting the display housing 140 with respect to the keyboard housing 120. For example, orientations may include orientations definable with respect to an axis (e.g., or axes) such as the axis ζ and an angle Φ about that axis.

FIG. 1 shows some examples of orientations 101, 103, 105, 107 and 109. The orientations 101, 103, 105, 107 and 109 may correspond to orientations of a clamshell computing system; noting that some clamshell computing systems may be limited in open angle orientations. For example, a clamshell computing system may be able to be opened to the orientation 109 (e.g., substantially 180 degrees) without being able to be opened to the orientation 107 (e.g., substantially 360 degrees).

As shown in FIG. 1, the orientation 101 may be a notebook orientation where the angle Φ is about 90 degrees or more (e.g., or optionally somewhat less than about 90 degrees depending on position of a user, etc.). As shown, for the orientation 101, a user may use a finger or fingers of one or both hands to depress keys 125 of the keyboard 124 (e.g., touch typing), for example, while viewing information being rendered to the display 144 of the display housing 140 (e.g., using the one or more processors 112, the memory 114, etc. that may be included in the keyboard housing 120, the display housing 140 or both).

As an example, the keyboard housing 120 may include a frontal surface 122 and may include a touch input surface 123 (e.g., of a touch input device such as a touchpad). As an example, the keyboard 124 may include one or more other input devices (e.g., a control stick, etc.). As an example, the frontal surface 122 may be a surface suitable for resting a palm or palms of a hand or hands. For example, as shown in FIG. 1, the touch input surface 123 can be defined by x and y dimensions where a left palm rest surface is to the left of the touch input surface 123 and where a right palm rest surface is to the right of the touch input surface 123. In such an example, the left and right palm rest surfaces may be defined by respective x and y dimensions as well as a spacing therebetween. Where a system does not include a touch input surface such as the touch input surface 123, the frontal surface 122 may extend in the y direction approximately from a left side of the keyboard housing 120 to a right side of the keyboard housing. Such a surface can be a left and right palm rest surface.

A palm rest surface can allow a user to rest a palm or palms while the user may type (e.g., touch type) using keys of a keyboard that is part of a keyboard housing. For example, a user can rest a palm on a palm rest surface while using one or more finger tips (e.g., or finger pads) to touch keys to thereby instruct a computing device to receive input instructions. In such an example, the keys of the keyboard may be depressible keys. A depressible key may include a spring mechanism that allows the key to be, responsive to finger applied force, depressed a distance in the z direction of the Cartesian coordinate system of a keyboard housing to a level that may be a maximum depression level where, upon release of the force, the key may then return to an undepressed level.

As to the orientation 103, it may correspond to a display orientation for viewing the display 144 where the keyboard 124 faces downward and the computing device 100 is supported by the keyboard housing 120 (e.g., by a rim about the keyboard 124, the frontal surface 122, etc.). As to the orientation 105, it may correspond to a "tent" orientation where the display 144 faces outwardly for viewing on one side of the tent and the keyboard 124 of the keyboard housing 120 faces outwardly on the other side of the tent.

The orientation 107 may be a tablet orientation where the angle Φ is about 360 degrees such that a normal outward vector N₁ of the keyboard 124 of the keyboard housing 120 and a normal outward vector N₂ of the display 144 of the display housing 140 are oriented in oppositely pointing directions, pointing away from each other; whereas, in contrast, for a closed orientation of the computing device 100 (e.g., where the angle Φ is about 0 degrees), the vectors N₁ and N₂ would be pointing toward each other.

In the orientation 107, the keyboard 124 has its keys 125 pointing outwardly in the direction of the vector N₁. Where the keys 125 are depressible keys, when a user grasps the computing device 100, the keys 125 may be contacted by the user's hand or hands. A user may perceive the springiness of the keys 125 as being somewhat undesirable. For example, springy keys may interfere with a user's ability to comprehend or sense force that is sufficient to grasp the computing device 100, which may cause the user to grasp too lightly or to grasp too strongly, which may possibly impact integrity of the keys (e.g., springs, spring-mechanisms, contacts, etc.). In contrast, a surface without such depressible keys may have a more even feel to a user and may be less distracting. An arrangement that allows for such a surface may include a single hinge that allows for pivoting a keyboard housing with respect to a display housing such that keys of the keyboard housing can be oriented to face a back side of a display housing (a side opposite the display). In such an approach, a user may spin the keyboard housing by 180 degrees about a central axis of the single hinge (e.g., an axis orthogonal to the axis ζ) and then rotate the keyboard housing such that the keys face the back side of the display in a folded orientation. In such an example, a single centrally located hinge provides symmetry such that a computing system can be aligned in a clamshell closed orientation and a tablet orientation, optionally with the keys of the keyboard housing facing the back side of a display of a display housing.

The orientation 109 may be a planar orientation where the angle Φ is about 180 degrees such that a normal outward vector N₁ of the keyboard 124 of the keyboard housing 120 and a normal outward vector N₂ of the display 144 of the display housing 140 are oriented in approximately the same pointing directions.

Various computing systems such as laptop or notebook computing devices can be characterized at least in part by a footprint. For example, the computing device 100 of FIG. 1 may be characterized at least in part by dimensions in x and y as to the keyboard housing 120 and/or as to the display housing 140. As an example, a footprint can be an area that can be defined by a plane in the x and y directions of the Cartesian coordinate systems shown in FIG. 1.

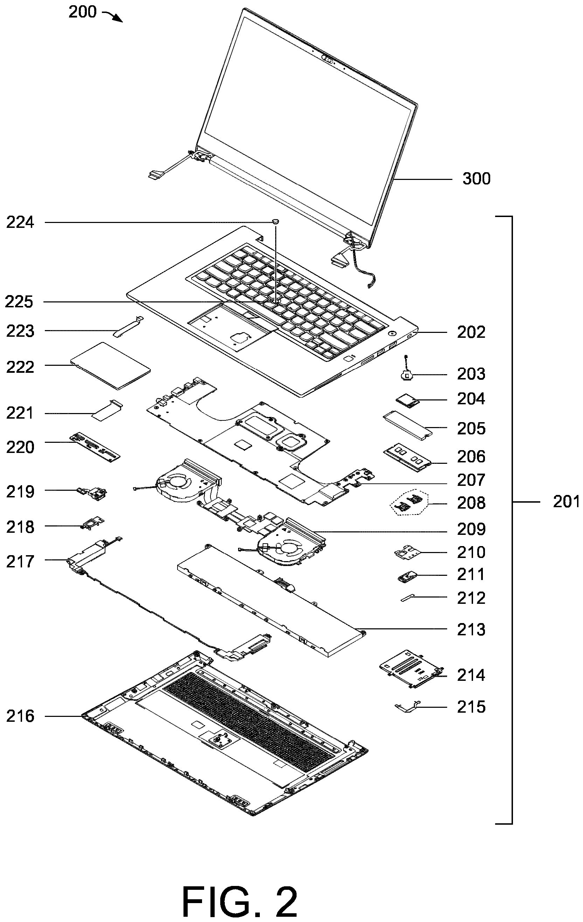

FIG. 2 shows an exploded perspective view of a computing device 200 as including various components, which can include, for example, a keyboard housing assembly 201 and a display housing assembly 300 where the keyboard housing assembly 201 can include, for example, a top cover assembly 202, a battery 203, a wireless-LAN (WLAN) card 204, a solid-state drive 205, a memory component 206, a system board 207, serial bus connectors 208, a thermal fan assembly 209, a fingerprint reader bracket 210, a fingerprint reader 211, a fingerprint reader cable 212, a battery 213, card reader 214, a card reader cable 215, a base cover assembly 216, a speaker assembly 217, a DC-in bracket 218, a DC-in cable 219, a keyboard card 220, a keyboard card cable 221, a trackpad 222, a trackpad cable 223, and a TRACKPOINT human interface device (HID) cap 224 for a TRACKPOINT HID 225.

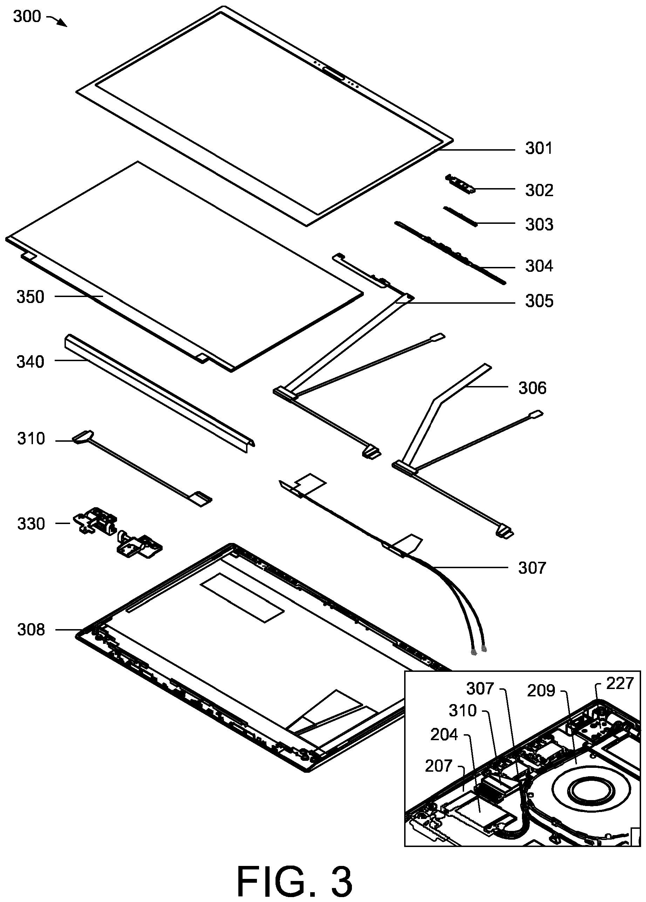

FIG. 3 shows an exploded perspective view of the display housing assembly 300 of FIG. 2 as including, for example, a bezel frame 301, a camera shutter 302, a camera card 303 or an infrared camera/microphone card 304 where, for the camera card 303, the display housing assembly 300 may include a cable with a microphone card 305, and where, for the infrared (IR) camera/microphone card 304, the display assembly may include a cable for the IR camera module 306; noting that one or more other cables and/or alternative cables may be included (e.g., consider an LED cable, etc.). As shown, the display housing assembly 300 can include a WLAN antenna kit 307, a rear cover assembly 308, hinges 330, a display cable 310, a cover 340, and a display panel 350. As shown, the example display housing assembly 300 of FIG. 3 may include various cables and/or connectors (e.g., cable connectors, etc.). For example, consider the cables associated with components and/or assemblies 305, 306, 307 and 310 as being routed such that respective connectors extend outwardly from the display housing assembly 300 such that they can be coupled to mating connectors (e.g., interfaces) of the keyboard housing assembly 201. For example, FIG. 2 shows the display housing assembly 300 as including various cables with respective connectors extending outwardly therefrom. In such an example, one or more cables may extend from a left side proximate to a left side hinge assembly and one or more cables may extend from a right side proximate to a right side hinge assembly.

A hardware maintenance manual for the LENOVO THINKPAD P1/X1 EXTREME computing devices is incorporated by reference herein (Second Edition, November 2018). As an example, a computing device may include one or more features of one or more of the THINKPAD P1/X1 EXTREME computing devices.

As an example, a cable may include wires for multiple components where, for example, the cable can include cable connectors for each of the multiple components where wires extending from the cable connectors are joined together for at least a portion of a length of the cable and routed to a single cable connector or to multiple cable connectors. In such an example, the multiple components may include one or more of a display panel, touch-sensitive circuitry, digitizer circuitry (e.g., for a stylus, etc.), a camera, a LED, a microphone, etc. As an example, a cable may include one or more pigtails, which may include one or more component end pigtails and/or one or more interface end pigtails. As an example, a cable may include one or more electromagnetic energy conductors. As an example, an electromagnetic energy conductor may be an optical fiber. As an example, a cable may include a waveguide.

In the example of FIG. 3, the WLAN antenna kit 307 may include one or more cables with one or more respective connectors (e.g., a main connector and an auxiliary connector), which may differ from the types of connectors of one or more other cables. As shown in FIG. 2 and FIG. 3, the keyboard housing assembly 201 can include the WLAN card 204, which may be positioned on the system board 207 a considerable distance inset from a hinge assembly region that includes one or more hinge mount features 227 such that the one or more cables of the WLAN antenna kit 307 may be of a considerable length. For example, the WLAN card 204 may be positioned on the system board 207 between the thermal fan assembly 209 and the battery 213 and accessible only upon removal of the base cover assembly 216 (e.g., lower shell of the keyboard housing assembly 201). Thus, to detach the display housing assembly 300 from the keyboard housing assembly 201, a user must perform various actions including removal of the base cover assembly 216 to access one or more interfaces of the WLAN card 204 that mate with one or more connectors (e.g., one or more cable connectors) of the WLAN antenna kit 307. Further, as shown in FIG. 2 and FIG. 3, an interface for a cable connector of the display cable 310 may be positioned on the system board 207, for example, adjacent to the thermal fan assembly 209 and the WLAN card 204. Hence, a user must perform various actions including removal of the base cover assembly 216 to access one or more connectors of the display cable 310 that mate with one or more interfaces of the system board 207; noting that, in an assembled state, the cable 305, the cable 306, and/or one or more other cables may include one or more connectors (e.g., one or more cable connectors) that are only accessible upon removal of the base cover assembly 216 due to mating with one or more corresponding interfaces that are covered by the base cover assembly 216. As an example, an interface may be a type of connector for forming an electrical connection (e.g., for one or more types of circuitry).

As to the display panel 350, replacement thereof involves various actions, which can include removal of the base cover assembly 216 from the keyboard housing assembly 201, removal of clips, disconnection of cables (e.g., disconnection of cable connectors from corresponding interfaces), removal of screws of keyboard housing assembly side leaves of the hinges 330, opening of the display housing assembly 300 via the hinges 330, and lifting the display housing assembly 300 outwardly away from the base cover assembly side of the keyboard housing assembly 201. Once the display housing assembly 300 is detached from the keyboard housing assembly 201, the bezel frame 301 can be removed, followed by removal of the cover 340 (e.g., a strip cover). In such a process, the bezel frame 301 may not be reusable such that a replacement bezel frame 301 is to be provided. Further, if the display panel 350 is a touch display panel, additional actions may be required. As to installation of a replacement display panel, various sponges (e.g., pieces of foam) are to be properly positioned on the rear cover assembly 308 followed by positioning of the replacement display panel along with re-assembly of various components, including the screws for the leaves of the hinges 330 that connect the hinges 330 to the keyboard housing assembly 201. In various instances, adhesive, which may include tape, etc., may be involved where stray adhesive may become a nuisance, causing undesirable sticking of debris, undesirable sticking of a portion of a cable, etc.

As an example, a computing device may be configured with a base housing assembly and a display housing assembly where the display housing assembly is a field replaceable unit (FRU). For example, a display housing assembly may be an FRU that can be readily replaced to address a display panel issue. Such an approach may provide for expedited decision making, replacement and return to service. Such an approach may also provide for refreshing one or more other components carried by a display housing assembly that may be already along a path toward an expected component lifetime.

As to decision making, consider a display panel issue that may result in a user, an IT person, a parent, etc., having to decide whether time, cost, uncertainty in repair, uncertainty in troubleshooting, overall lifespan, etc., are worth facing. As explained, replacing a display panel alone may be a relatively involved process where, for example, connections are to be secure, sponges are to be appropriately positioned, various screws are to be tightened to corresponding specifications, etc. One or more improper actions during disassembly, replacement display panel handling and/or during reassembly may result a new issue and/or a failure to resolve an existing issue. As explained, an individual or team may have to weigh various options and decide what is the most practical and financially viable for a particular situation. For one or more reasons, a computer system with an FRU display housing may be desirable option.

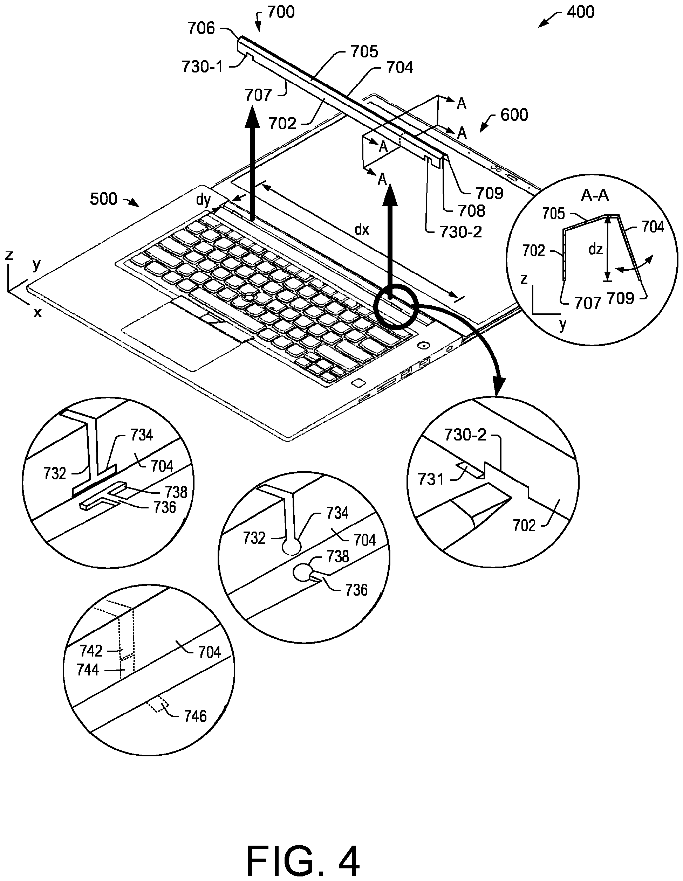

FIG. 4 shows an example, a computing device 400 with a keyboard housing assembly 500 and a display housing assembly 600 that are coupled together via one or more hinge assemblies that include fasteners where a tool access panel 700 may be opened for tool-based access to and operation of the one or more fasteners. While the example of FIG. 4 shows a single tool access panel 700, a computing device may include one or more tool access panels.

In the example of FIG. 4, a Cartesian coordinate system is shown with an x-axis representing a width direction, a y-axis representing a depth direction and a z-axis representing a thickness or height direction. As shown, the tool access panel 700 may be defined by a width dx, a depth dy and a thickness or height dz. As an example, the Cartesian coordinate system may be utilized to define, describe, etc., one or more features of the computing device 400 as shown in the open position of the example of FIG. 4, which may be described as being substantially planar. For example, the keyboard housing assembly 500 and the display housing assembly 600 may be positioned in a common plane, which may be parallel to a plane of a support surface such as, for example, a desktop, a tabletop, a countertop, etc. When open to the substantially 180-degree position as shown in FIG. 4, the computing device 400 may be considered to be relatively stable in that it is not readily amenable to tipping as if the display housing assembly 600 was open to approximately 90 degrees with respect to the keyboard housing assembly 500. As an example, servicing of the computing device 400 may be reduced in risk by positioning the computing device 400 in an open, substantially planar position where its footprint may be at or near a maximum and supported by a support surface.

As shown in the example of FIG. 4, the tool access panel 700 includes a front side 702, a back side 704, opposing ends 706 and 708, a top side 705 as disposed between a fore lower edge 707 and an aft lower edge 709. In cross-section, as shown in a view labeled A-A as indicated by a cutting plane, the tool access panel 700 may have a tent like shape, which may be defined by one or more straight and/or curved segments. For example, the front side 702 and the back side 704 may be substantially straight in cross-section while the top side 705 may be straight and/or curved. As an example, the front side 702 may be substantially vertical (e.g., along a direction of the z-axis) and the back side 704 may be non-vertical and, for example, resilient to act as a spring-loaded flap (see, e.g., curve with double-headed arrows). In such an example, the back side 704 may contact a portion of the display housing assembly 600, for example, to help reduce risk of debris entering into the display housing assembly 600. As an example, the front side 702 may contact a portion of the keyboard housing assembly 500 to reduce risk of debris entering into the keyboard housing assembly 500. As an example, the tool access panel 700 may be a spring-loaded dust cover where spring-loading is imparted via sizing, shape, material of construction, etc.

As explained, the tool access panel 700 may function, at least in part, as a type of dust cover that helps to prevent dust from entering the keyboard housing assembly 500 and/or the display housing assembly 600. As an example, the tool access panel 700 may be at least in part elastically deformable to accommodate closed and open angles of the display housing assembly 600 with respect to the keyboard housing assembly 500. For example, consider the tool access panel 700 as being elastically deformable to cover openings or recesses of the keyboard housing assembly 500 and/or the display housing assembly 600 when the computing device 400 is in a closed position and in one or more open positions.

As explained, in the example of FIG. 4, the computing device 400 is shown as being in an open position where an open angle of approximately 180 degrees exists between the keyboard housing assembly 500 and the display housing assembly 600. In such a position, a space may exist between a portion of the keyboard housing assembly 500 and the front side 702 of the tool access panel 700 such that one or more release features 730-1 and 730-2 are accessible by a tool. For example, consider a flat headed screwdriver as a tool with a flat headed end that may be inserted into a rectangular recess as a release feature where the tool may be manipulated to apply force to the tool access panel 700 to lift the front side 702 and thereby open the tool access panel 700. As an example, the tool access panel 700 may be resilient such that one portion may be released followed by another portion or, for example, the tool access panel 700 may be released via insertion of two tools where force may be applied in a relatively simultaneous manner to lift the front side 702. As shown in the example of FIG. 4, the tool access panel 700 may include one or more prongs 731. For example, consider a prong that may be moved upon application of force to the front side 702 of the tool access panel 700 to release the prong from a seat, which may be a seat formed by a component or a portion of a component of the keyboard housing assembly 500 (e.g., consider a lip formed by one or more of the components of the keyboard housing assembly 201 of FIG. 2 as may be included in the keyboard housing assembly 500). As explained, the back side 704 may be in contact with a portion of the display housing assembly 600 in a spring-biased manner such that force applied by one or more tools may act to compress the back side 704 such that clearance is created at the front side 702 to allow for lifting the front side 702 of the tool access panel 700 such that the fore lower edge 707 can clear one or more portions of the keyboard housing assembly 500.

In the example of FIG. 4, the one or more release features 730-1 and 730-2 may be on one or more sides of the tool access panel 700. As an example, the computing device 400 may include one or more latches that may, for example, be latchable and/or unlatchable in a manner that depends on an angle between a keyboard housing assembly and a display housing assembly. As an example, a latch may be a release feature or include one or more release features. As an example, as shown in FIG. 4, a latch may include a receptacle in the tool access panel 700 with a latch portion 732 (e.g., a dimensions retention channel, etc.) and a release portion 734 (e.g., a shaped release opening, etc.) where a shaft 736 may include a shaped feature 738 (e.g., T-shaped, ball-shaped, or another appropriate shape) that can be received via the release portion 734 and removed via the release portion 734 when the computing device 400 is in a substantially planar orientation with the keyboard housing assembly 500 and the display housing assembly 600 open to an approximately 180 degree angle (e.g., 180 degrees plus or minus approximately 15 degrees). As explained, a tool access panel may be formed of an elastically deformable material and/or with an elastically deformable portion. As an example, the back side 704 of the tool access panel 700 may be compressed toward the front side 702 of the tool access panel 700 and/or the front side 702 of the tool access panel may be compressed toward the back side 704 of the tool access panel 700 for unlatching of the tool access panel 700. As an example, a latch may prevent removal and/or opening of a tool access panel when housings of a computing device are not at a specified release angle and/or within a range of release angles where such a range may be limited to a number of degrees (e.g., 180 degrees plus or minus approximately 15 degrees).

As an example, a latch may include an extension that may be part of a housing assembly. For example, consider the shaft 736 as extending outwardly from a portion of the display housing assembly 600 (e.g., from the bezel 301, the rear cover assembly 308, etc.) where the tool access panel 700 may be positioned such that the shaped feature 738 of the shaft 736 is received via the release portion 734 whereby the tool access panel 700 may be snapped into position (e.g., into a closed position, etc.). In such an example, the display housing assembly 600 may be opened and closed with respect to the keyboard housing assembly 500 with the shaped feature 738 latched within the tool access panel 700 where, at a particular open position or a particular range of open positions, the tool access panel 700 may be released by passing of the shaped feature 738 through the release portion 734.

As an example, a latch may include one or more magnetic materials such as, for example, one or more magnets that may be paired with one or more other magnets and/or one or more ferromagnetic materials. As shown in FIG. 4, the tool access panel 700 may include regions 742 and 744 that may be associated with one or more magnets and/or one or more ferromagnetic materials and a housing assembly may include one or more regions 746 that may be associated with one or more magnets and/or one or more ferromagnetic materials. As an example, magnetic force may differ depending on position of a region of a display housing assembly with respect to a region of a tool access panel. For example, consider a magnetic latching mechanism that acts to retain the tool access panel (e.g., latch) when the display housing assembly is not in a predefined open position (e.g., approximately 180 degrees) with respect to a keyboard housing assembly and where, upon transitioning to the predefined open position, the magnetic latching mechanism acts to release the tool access panel (e.g., unlatch). In the example of FIG. 4, the regions 744 and 746 may be of opposite magnetic poles to thereby generate a repulsive magnetic force or, for example, the region 744 may be non-magnetic while the region 746 is magnetic and generates a force only with respect to the region 742. As an example, a computing device may include one or more latches that may utilize one or more types of latching mechanism.

As explained, the tool access panel 700 and/or one or more of the keyboard housing assembly 500 and the display housing assembly 600 may include one or more features for retaining and/or releasing the tool access panel 700 such that a region or regions may be accessed, for example, for purposes of detachment of the display housing assembly 600 from the keyboard housing assembly 500.

As shown in the example of FIG. 4, in an open position, the tool access panel 700 may be lifted or otherwise maneuvered to be completely moved away from the keyboard housing assembly 500 and the display housing assembly 600 such that the tool access panel 700 is completely separated from the keyboard housing assembly 500 and the display housing assembly 600. In various examples, a tool access panel may be opened while remaining in contact with and/or tethered to one or more of the keyboard housing assembly 500 and the display housing assembly 600.

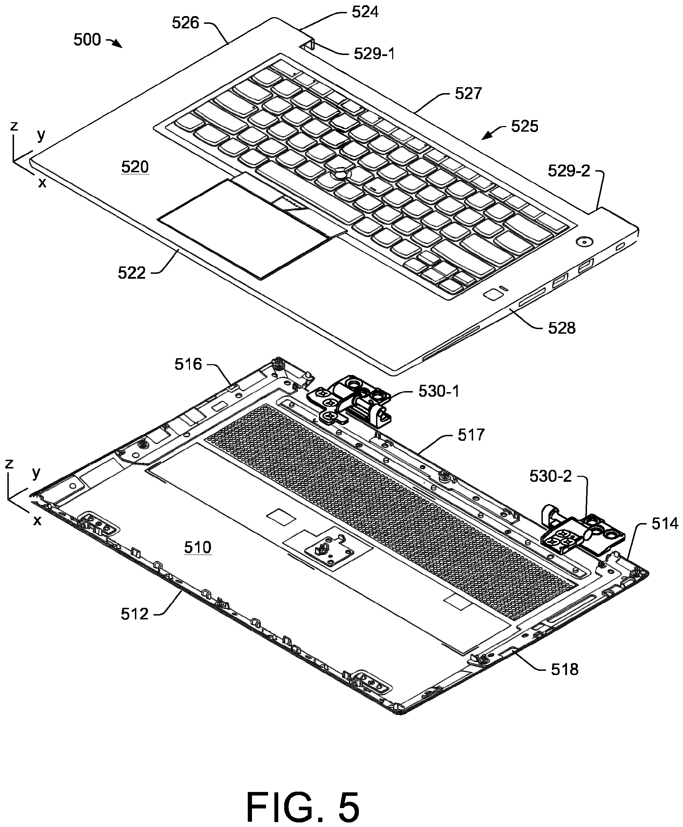

FIG. 5 shows an example of the keyboard housing assembly 500 where the keyboard housing assembly 500 includes a lower shell 510 and an upper shell 520 that can be coupled together, for example, to housing one or more components, etc.

As shown in the example of FIG. 5, the lower shell 510 can include a front edge 512, a back edge 514, opposing side edges 516 and 518 and a recessed back edge 517 where, for example, hinge assemblies 530-1 and 530-2 are coupled to the lower shell 510. As shown in the example of FIG. 5, the upper shell 520 can include a front edge 522, a back edge 524, opposing side edges 526 and 528, and a recess 525 defined by a recessed back edge 527 and corners 529-1 and 529-2.

In the example of FIG. 5, the recess 525 may provide for a line-of-sight to one or more fasteners of the hinge assemblies 530-1 and 530-2. For example, the tool access panel 700 may cover the recess 525 in a closed position and may be opened to reveal a line of sight to one or more fasteners of the hinge assemblies 530-1 and 530-2. In such an example, a tool may be inserted via the recess 525 to contact one or more fasteners where such one or more fasteners act to couple one or more of the hinge assemblies 530-1 and 530-2 to the lower shell 510 of the keyboard housing assembly 500.

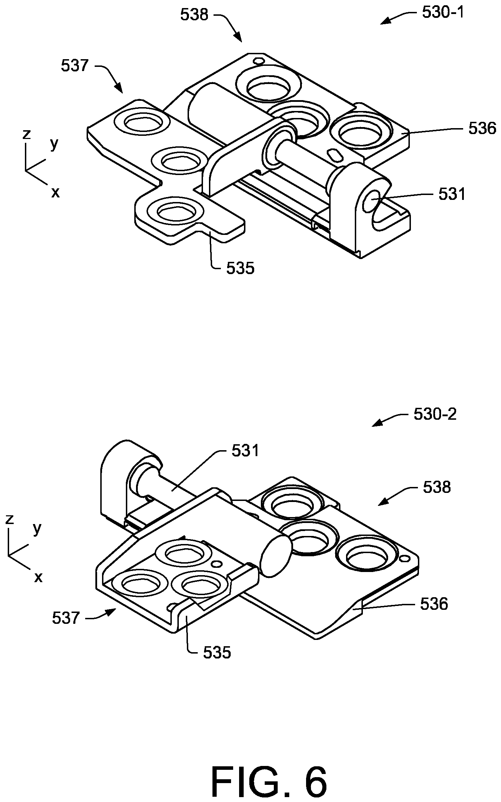

FIG. 6 shows perspective views of the example hinge assemblies 530-1 and 530-2. As shown, each of the hinge assemblies 530-1 and 530-2 can include an axle 531 that defines a rotational axis for a keyboard housing leaf 535 and a display housing leaf 536 where each of the leaves 535 and 536 can include respective openings 537 and 538 for receipt of one or more fasteners to thereby couple the leaves 535 and 536 to a respective housing. As an example, one or more fasteners may be cooperatively coupled to a respective housing using one or more hinge mount features (see, e.g., the one or more hinge mount features 227 of the example of FIG. 3).

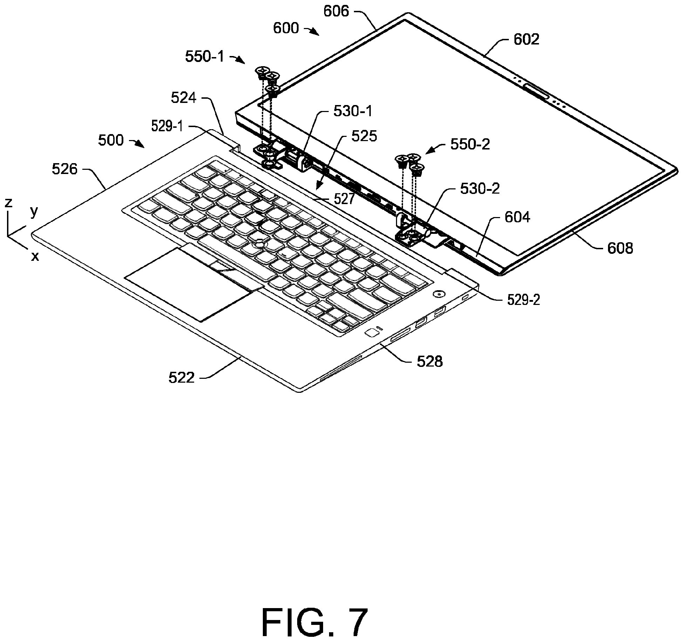

FIG. 7 shows an example of the keyboard housing assembly 500 and the display housing assembly 600 without the tool access panel 700. As shown, the display housing assembly 600 can include a front edge 602, which aligns substantially with the front edge 502 of the keyboard housing assembly 500 when in a closed position, a back edge 604 (e.g., a hinge side edge), opposing side edges 606 and 608. In the example of FIG. 7, upon opening of the tool access panel 700, line-of-sight access to the fasteners 550-1 and 550-2 via the recess 525 may allow for removal of the fasteners 550-1 and 550-2 from respective keyboard housing leaves 535 of the hinge assemblies 530-1 and 530-2 to thereby allow for decoupling of the display housing assembly 600 from the keyboard housing assembly 500.

As explained, a display housing assembly may be an FRU such that it may be replaced via a process that involves opening the computing device 400 to an approximately 180 degree open position followed by opening of the tool access panel 700 and removal of the fasteners 550-1 and 550-2 using a tool, which may be a tool suitable for use in opening of the tool access panel 700 or a different tool (e.g., consider a cross-head type of screwdriver, a TORX-head type of screwdriver, a hex-head type of screwdriver, etc.). In such an example, the hinge assemblies 530-1 and 530-2 may remain fixed to the display housing assembly 600 while the display housing assembly 600 is separated the keyboard housing assembly 500 such that, for example, the display housing assembly 600 may be replaced as an FRU.

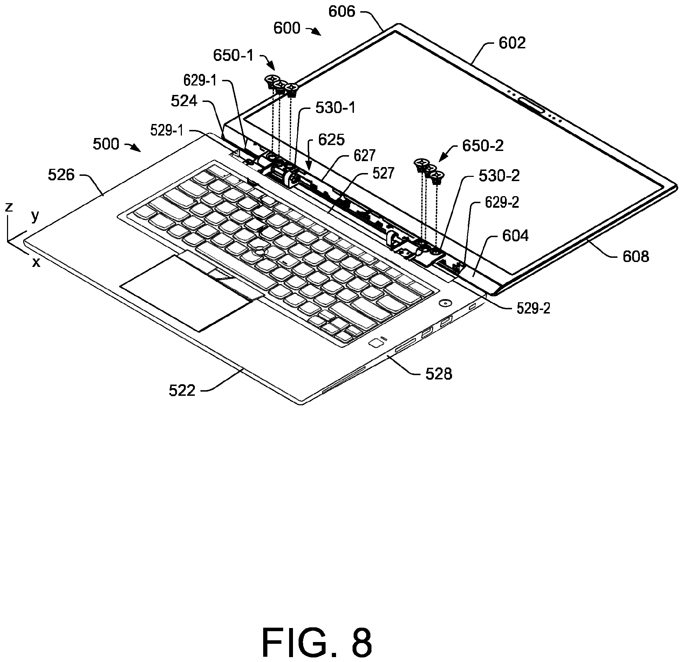

FIG. 8 shows another example of the keyboard housing assembly 500 and the display housing assembly 600 without the tool access panel 700. In the example of FIG. 8, the display housing assembly 600 is shown as including a recess 625 at the back edge 604 (e.g., hinge side edge) as may be defined by a recessed edge 627 and corners 629-1 and 629-2. In the example of FIG. 8, opening of the tool access panel 700 may provide for line-of-sight access to fasteners 650-1 and 650-2 of respective display housing leaves 536 of the hinge assemblies 530-1 and 530-2 via the recess 625.

As explained, a display housing assembly may be an FRU such that it may be replaced via a process that involves opening the computing device 400 to an approximately 180 degree open position followed by opening of the tool access panel 700 and removal of the fasteners 650-1 and 650-2 using a tool, which may be a tool suitable for use in opening of the tool access panel 700 or a different tool (e.g., consider a cross-head type of screwdriver, a TORX-head type of screwdriver, a hex-head type of screwdriver, etc.). In such an example, the hinge assemblies 530-1 and 530-2 may remain fixed to the keyboard housing assembly 500 while the display housing assembly 600 is separated therefrom, for example, to be replaced as an FRU.

As explained with respect to the examples of FIG. 7 and FIG. 8, one or more hinge assemblies may include one or more leaves where one or more fasteners can be utilized to couple a hinge assembly to a respective housing. As explained, a tool access panel or tool access panels may provide for line-of-sight access to one or more fasteners to thereby allow for decoupling a leaf of a hinge assembly from a housing such that a display housing assembly may be replaceable as an FRU.

As an example, a computing device can include a processor; memory accessible to the processor; a display housing assembly that includes a display panel and display housing hinge mount features; a keyboard housing assembly that includes a keyboard, keyboard housing hinge mount features, and one or more tool access panels; and a hinge assembly that rotatably couples the display housing assembly and the keyboard housing assembly via the display housing hinge mount features, the keyboard housing hinge mount features, and one or more fasteners, where the display housing assembly is attachable to and detachable from the keyboard housing assembly via opening of the one or more tool access panels for tool-based access to and operation of the one or more fasteners.

As an example, computing device can include a display housing assembly that includes components and component cables; a keyboard housing assembly that includes a processor, memory accessible to the processor, a keyboard, a keyboard side, a base side opposite the keyboard side, cable connector interfaces, and one or more covers disposed on the keyboard side and positionable for access to one or more of the cable connector interfaces; and a hinge assembly that rotatably couples the display housing assembly to the keyboard housing assembly. In such an example, the one or more covers may include one or more tool access panels.

As an example, a computing device may include a keyboard housing assembly and a display housing assembly coupled via one or more hinge assemblies where the computing device may be a clamshell computing device (e.g., a laptop, a notebook, etc.).

As an example, a computing device can include a removable bar-hinge cover with concealed access notches. In such an example, the bar-hinge cover may provide for direct access to one or more hinge assemblies and cabling underneath the bar-hinge cover without demand for removal of one or more other components. As explained, a tool access panel may be opened for access to one or more features of a computing device. As explained, one or more cable connector interfaces may be underneath a bar-hinge cover to provide for ease of disconnection and/or connection of one or more cable connectors.

As an example, a computing device may include a cover (e.g., tool access panel, etc.) that can help to reduce risk of accidental damage to the cover and/or components around it when the cover is being opened (e.g., removed, etc.). As an example, a cover may be positionable, attachable, removable, etc., without one or more features that may overly complicate the cover and/or make the cover amenable to damage (e.g., consider a cover without snaps or easily breakable fastening features).

As explained, a cover may help to reduce repair and/or replacement time of a top-up assembly, which may be a display housing assembly. As explained, such an assembly may include a display panel, a camera sub-assembly, one or more hinge associated components and/or features, etc.

As explained, for various computing devices, features, components, etc., that may cover one or more portions of one or more hinge assemblies may be complicated to remove. For example, consider a computing device that demands remove of a bezel to access and remove a hinge cover, which may increase risk of damage to the bezel and/or the hinge cover. In such an example, removal of the hinge cover may also increase risk of damage to one or more other components around it. For various computing devices, a hinge cover may be a purely cosmetic component without an additional function. In such devices, the hinge cover may be an impediment to access to one or more components (e.g., hinge components, cable components, etc.) where, for example, servicing involves replacement of a display panel.

As an example, a cover, which may be a tool access panel, may include notches that provide clear access points to open the cover, for example, by inserting a prying tool (e.g., a flat-head screw driver) and gently lifting the cover upwards, disengaging its attachment mechanism (e.g., consider one or more prongs, etc.). As explained, opening a computing device to substantially 180 degrees may help to access and/or reveal such notches. As an example, such notches may remain relatively hidden in one or more clamshell positions of a computing device to thereby help to maintain aesthetics of the computing device and, for example, to help to reduce risks of accidental opening or prying.

As an example, a cover (e.g., a tool access panel) may be opened to provide access to regions that house components and cables that are critical to display panel removal and/or replacement. As an example, a cover may be attachable in a calibrated manner that helps to assure its durable and staying attached, while also providing for opening (e.g., removal) using an appropriate tool and technique.

As an example, a cover (e.g., a tool access panel) may be attachable via one or more mechanisms, which may include a magnetic mechanism, a snap-fit mechanism, etc. As to a magnetic mechanism, one or more magnets may be included where, for example, upon rotation of housing assemblies of a computing device to an angle of approximately 180 degrees, a magnetic attraction force may be disabled and/or a magnetic repulsion force established that may provide for release and/or opening of a cover (e.g., a tool access panel). As an example, an attachment mechanism may be an interference fit mechanism where, for example, a cover may be resilient (e.g., elastically deformable) for purposes of detachment (e.g., opening) and reattachment. As explained, such a cover may be a hinge cover where opening and/or removal does not require removal of one or more other components and, for example, may be performed with a reduced risk of damage to one or more other components (e.g., one or more adjacent, proximate, etc., components).

As explained, servicing of a computing device can include a relatively complicated series of actions, maneuvers, etc., which may consume time, resources, pose risks, etc. A computing device with a keyboard housing assembly and a display housing assembly may be defined using monikers A, B, C and D where an A-cover is a back side shell of a display housing assembly, a B-cover is bezel of a display side of a display housing assembly, a C-cover is a keyboard bezel of a keyboard side of a keyboard housing assembly and a D-cover is a bottom shell of a keyboard housing assembly (see, e.g., the base cover assembly 216). Some computing devices demand that a user opens up a D-cover to access a system board to disconnect hinge-up component connectors for circuitry of a display housing assembly, un-route cables about one or more hinge assemblies and remove one or more hinge covers to replace one or more components in the hinge-up assembly (e.g., a display housing assembly). For various computing devices, layout and placement of parts that need to be accessed for repair and replacement of one or more hinge-up components are not centralized and require removing and accessing unrelated components increasing the repair/replacement time and/or risks of damage to one or more components.

As an example, a computing device can include cables and/or connectors (e.g., male, female, sockets, plugs, etc.) for hinge-up components where the cables and/or connectors are positioned below a cover, which may be a tool access panel. Such an approach, may differ from an approach that positions cables and/or connectors at and/or on a system board, which may demand removal of a D-cover and/or a C-cover for access. As an example, cables and/or connectors for hinge-up components may be one or more components in a display housing assembly such as, for example, one or more of a display panel, a digitizer panel, touch-sensing circuitry, a hinge component, an antenna, an LED indicator, etc.

As an example, a computing device can include one or more regions for one or more cables and/or connectors that are accessible via opening of a cover, which may be a tool access panel. For example, cable housing and connector routing of a computing device may be molded under a cover, which may be a hinge cover. As an example, all cabling for top-up components may go through one or more regions that become accessible via opening of a cover. For example, consider cabling that is segmented in a region below a cover, which may be a hinge cover.

As an example, one or more fasteners may be accessible via opening of a hinge cover. In such an example, a computing device may be designed to be easier to access and remove by a user various cable and/or other components to thereby release top-up components (e.g., display housing assembly components) while maintaining overall torque requirements when screwed back on (e.g., when one or more fasteners are operated upon to recouple a display housing assembly, etc.).

As an example, cables and connectors that need to be accessed for repair and/or replacement of top-up components may be substantially co-located in a hinge region (e.g., between a pair of hinge assemblies, etc.) that is located under a cover. In such an approach, the cables and/or connectors may be closer to other top-up components.

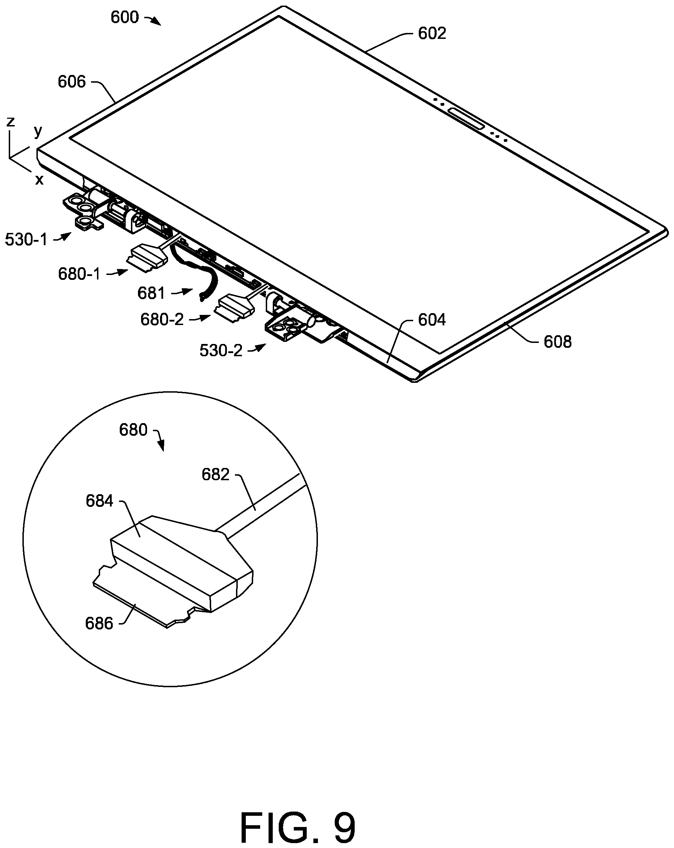

FIG. 9 shows an example of the display housing assembly 600 where the hinge assemblies 530-1 and 530-2 are coupled to the display housing assembly 600 and where one or more cable connectors 680-1, 680-2 and 681 are disposed in a region between the hinge assemblies 530-1 and 530-2. As shown, a cable connector 680 can include a cable 682, a head 684 and an electrical contact 686 as may be supported by the head 684 and electrically coupled to one or more wires of the cable 682; noting that the one or more cable connectors 681 may also include a cable, a head and an electrical contact. As an example, a cover (e.g., a tool access panel) may be opened to access fasteners for releasing the hinge assemblies 530-1 and 530-2 from a keyboard housing assembly such that the display housing assembly 600 can be detached where, for example, detachment may include accessing the one or more cable connectors 680-1, 680-2 and 681 for disconnection from one or more corresponding interfaces (e.g., one or more cable connector interfaces), which may be located under the cover and accessible upon opening of the cover. As an example, an interface may be a connector, for example, an interface may receive a portion of a cable connector to thereby form a connection. In such an example, electrical contact may be made between corresponding electrical contacts of the interface and the portion of the cable connector. As an example, an interface may be referred to as a cable connector interface. As an example, a connector may be a cable connector interface, which may include one or more male and/or one or more female features and/or, for example, one or more contact features that may include one or more spring-loaded contacts (e.g., consider pogo-pins, etc.). As an example, a connection may be facilitated through use of one or more magnets. For example, consider a magnetic cable connector and/or a magnetic cable connector interface where a magnetic attraction force may help to retain a connection.

As an example, the display housing assembly 600 of FIG. 9 may be compared to the display housing assembly 300 of FIG. 2 and/or FIG. 3 where cables with respective connectors are routed differently, for example, to ease detachment of the display housing assembly 600.

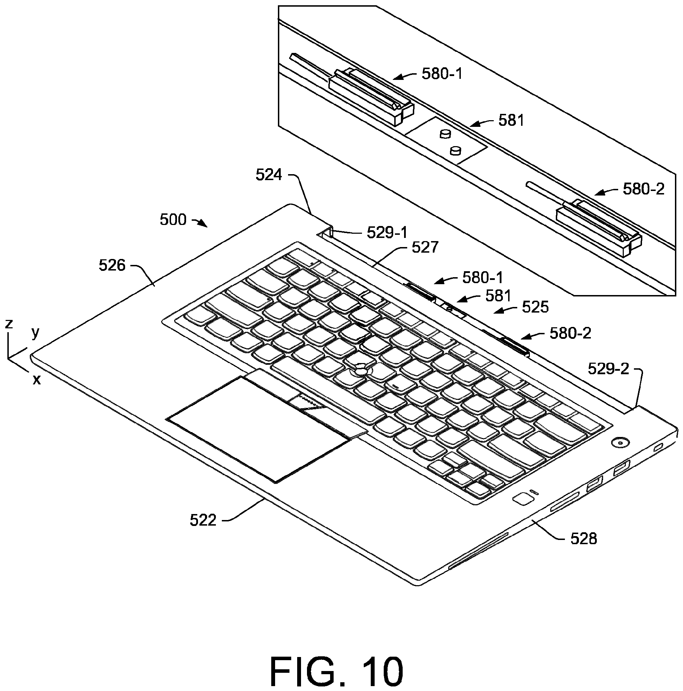

FIG. 10 shows an example of the keyboard housing assembly 500 as including one or more interfaces 580-1, 580-2 and 581 (e.g., one or more cable connector interfaces), as may be accessible via the recess 525, which may be accessible upon opening of a cover such as, for example, the tool access panel 700. In such an example, one or more fasteners for one or more hinge assemblies and the one or more interfaces 580-1, 580-2 and 581 may be accessible for expediting detachment of a display housing assembly from the keyboard housing assembly 500.

As an example, a computing device may include one or more jumpers for one or more components where, for example, a jumper junction may be accessible via a cover such as a tool access panel. For example, consider a jumper that extends from a jumper junction to a WLAN card such that the WLAN card may be suitable positioned within a keyboard housing assembly while providing for disconnecting WLAN antenna at the jumper junction (e.g., one or more interfaces). In the example of FIG. 10, the one or more interfaces 580-1, 580-2 and 581 may be one or more jumper junction interfaces. As an example, a jumper junction may introduce another interface to a computing device where, for example, such an interface provides for ease of detachment of one housing of the computing device from another housing of the computing device.

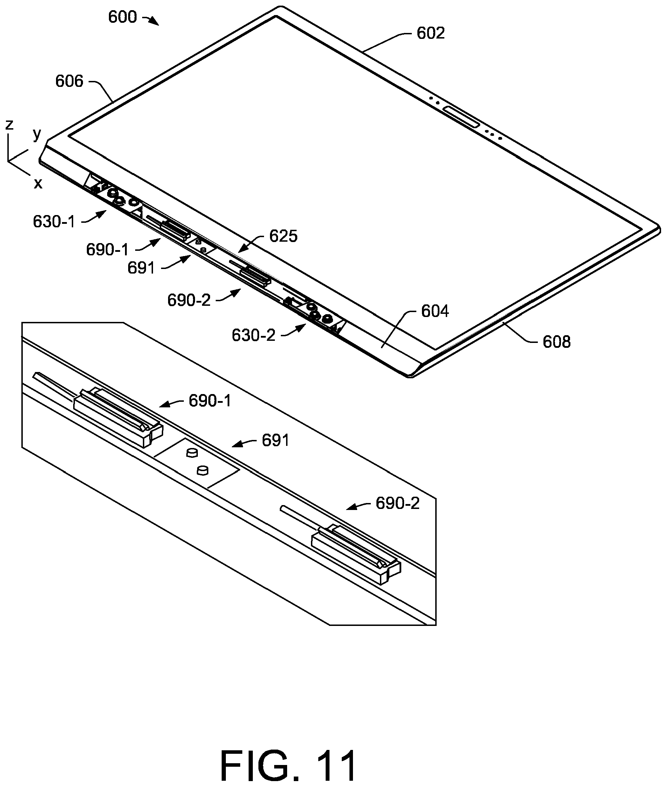

FIG. 11 shows an example of the display housing assembly 600 as including one or more interfaces 690-1, 690-2 and 691 (e.g., one or more cable connector interfaces) and, for example, one or more hinge mount features 630-1 and 630-2, within a recess 625, which may be accessible via opening of a cover such as, for example, the tool access panel 700. As shown, the one or more interfaces 690-1, 690-2 and 691 may be disposed in a region between the hinge mount features 630-1 and 630-2. As an example, upon opening of a cover (e.g., a tool access panel), the one or more interfaces 690-1, 690-2 and 691 and the hinge mount features 630-1 and 630-2 may be accessible such that the display housing assembly 600 may be detached from a keyboard housing assembly. As an example, hinge mount features may include threaded bores, bayonets, etc., which may, for example, receive a fastener that may be a threaded fastener, a bayonet fastener, etc. (e.g., consider a screw, a bolt, etc.).

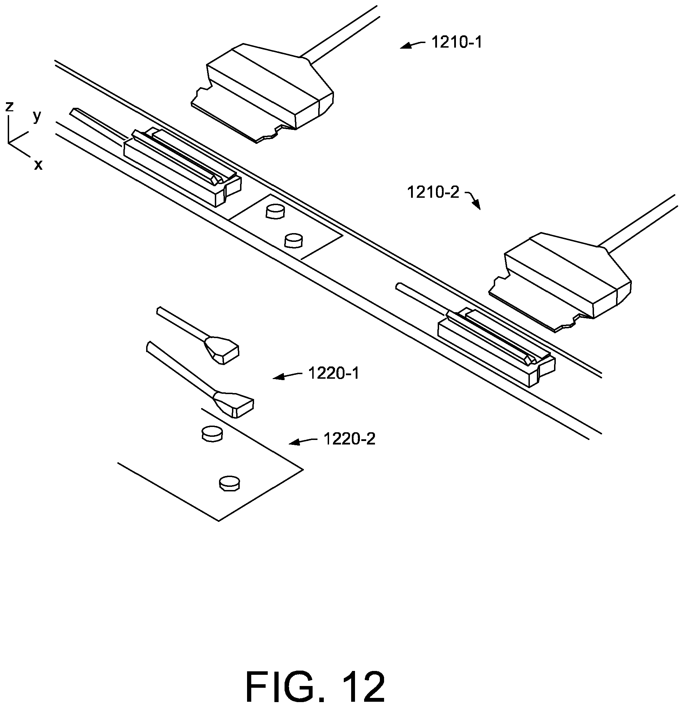

FIG. 12 shows examples of various cable connectors and interfaces 1210-1, 1210-2, 1220-1 and 1220-2 that may be mated for attachment and separated for detachment. As an example, one or more of such types of cable connectors and/or interfaces (e.g., cable connector interfaces) may be present in a region or regions under a cover or covers that may be opened, for example, without removable of an A-cover, a B-cover, a C-cover and/or a D-cover of a computing device. As an example, the cable connectors and interfaces 1210-1 and 1210-2 may be for various media signals, for example, consider display, camera, etc., while, for example, the connectors and interfaces 1220-1 and 1220-2 may be for one or more antennas (e.g., a WLAN antenna, etc.). As explained, a computing device can include features that provide for detachment of a display housing assembly from a keyboard housing assembly without removal of a D-cover, which can be a full-sized bottom shell of a keyboard housing assembly, for example, as explained with respect to FIG. 2 and FIG. 3.

As an example, one or more interfaces may be accessible via opening of a cover for purposes of diagnostics, for example, to diagnose an issue with respect to operation of one or more components (e.g., a component issue, a component connection issue, etc.). In such an example, diagnostics may be performed in an expedited manner where, for example, one or more of an A-cover, a B-cover, a C-cover and a D-cover need not be removed for access to an interface. As an example, diagnostics may involve disconnecting a cable connector of a cable from an interface (e.g., a cable connector interface) and mating the cable connector and/or the interface with a diagnostic interface and/or a diagnostic cable connector.

As an example, a display housing assembly may include one or more cables (e.g., with one or more cable connectors) and/or one or more interfaces (e.g., one or more cable connector interfaces) and/or a keyboard housing assembly may include one or more cables (e.g., with one or more cable connectors) and/or one or more interfaces (e.g., one or more cable connector interfaces). In such an example, one or more connections between a cable and an interface may be accessible via opening of one or more covers (e.g., one or more tool access panels) such that the display housing assembly can be detached from the keyboard housing assembly. As explained, such one or more covers may be opened upon transitioning a display housing assembly and a keyboard housing assembly to a predetermined open angle (e.g., consider an open angle of approximately 180 degrees).

As explained, a display housing assembly can include various components where one or more of the components may be electrically coupled to a cable (e.g., with a cable connector) and/or an interface (e.g., a cable connector interface, etc.). For example, the display housing assembly 300 of FIG. 3 shows various components that can be electrical components that may be electrically coupled to one or more components of a keyboard housing assembly. As explained, components of a display housing assembly may include a display panel, one or more cameras, one or more microphones, one or more antennas, etc.

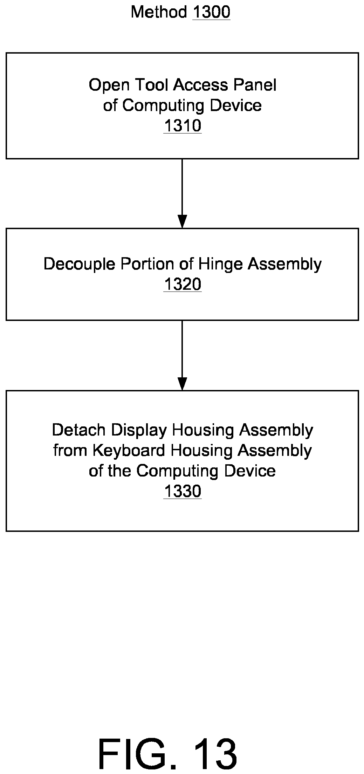

FIG. 13 shows an example of a method 1300 that includes an open block 1310 for opening a tool access panel of a computing device, a decouple block 1320 for decoupling a portion of a hinge assembly, and a detachment block 1330 for detaching a display housing assembly from a keyboard housing assembly of the computing device.

As an example, a method can include providing a clamshell computing device in an open orientation to at least a predefined open angle via a hinge assembly that rotatably couples a display housing assembly and a keyboard housing assembly of the clamshell computing device; opening one or more tool access panels for tool-based access to one or more fasteners of the hinge assembly; and releasing the display housing assembly from the keyboard housing assembly upon tool-based loosening of the one or more fasteners.

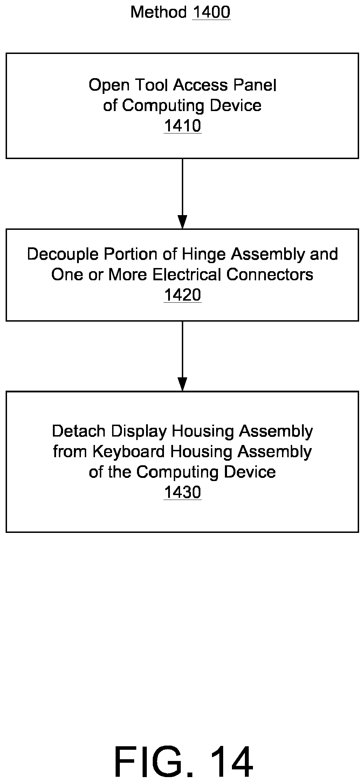

FIG. 14 shows an example of a method 1400 that includes an open block 1410 for opening a tool access panel of a computing device, a decouple block 1420 for decoupling a portion of a hinge assembly and one or more electrical connectors (e.g., cable connectors, cable connector interfaces, etc.), and a detachment block 1430 for detaching a display housing assembly from a keyboard housing assembly of the computing device.

As an example, a method can include providing a clamshell computing device in an open orientation to at least a predefined open angle via a hinge assembly that rotatably couples a display housing assembly and a keyboard housing assembly of the clamshell computing device; opening one or more covers on a keyboard side of the keyboard housing assembly for access to cable connector interfaces for cables of the display housing assembly; and separating the display housing assembly from the keyboard housing assembly upon disconnecting the cables from the cable connector interfaces.

As an example, a computing device can include a processor; memory accessible to the processor; a display housing assembly that includes a display panel and display housing hinge mount features; a keyboard housing assembly that includes a keyboard, keyboard housing hinge mount features, and one or more tool access panels; and a hinge assembly that rotatably couples the display housing assembly and the keyboard housing assembly via the display housing hinge mount features, the keyboard housing hinge mount features, and one or more fasteners, where the display housing assembly is attachable to and detachable from the keyboard housing assembly via opening of the one or more tool access panels for tool-based access to and operation of the one or more fasteners.

As an example, a hinge assembly may include a first hinge and a second hinge and display housing hinge mount features may include a first set of hinge mount features for the first hinge and a second set of hinge mount features for the second hinge. In such an example, one or more tool access panels may be a single tool access panel that covers the first set of hinge mount features and the second set of hinge mount features or, for example, one or more tool access panels may include a first tool access panel that covers the first set of hinge mount features and a second tool access panel that covers the second set of hinge mount features.

As an example, a keyboard housing assembly can include a front edge and a back edge where one or more tool access panels are located adjacent to the back edge. As an example, a back edge may be a hinge side edge where one or more hinge assemblies may extend outwardly from the back edge. For example, consider a hinge assembly with leaves where one leaf mounts to one housing assembly and another leaf mounts to another housing assembly such that upon disconnection of a leaf from one of the housings, the leaf may extend outwardly from the housing assembly to which it is still connected to.

As an example, a keyboard housing assembly can include a keyboard side and a base side where one or more tool access panels are located on the keyboard side. In such an example, the keyboard housing assembly can include a front edge and a back edge and the one or more tool access panels are located adjacent to the back edge. In such an example, a front edge may be a user facing edge. For example, consider a keyboard with a space bar key where the space bar key may be at a front edge of the keyboard.

As an example, one or more tool access panels may be transitionable to an open position in a substantially 180-degree orientation of a display housing assembly to a keyboard housing assembly. In such an example, the one or more tool access panels may be only transitionable to the open position in the substantially 180-degree orientation of the display housing assembly to the keyboard housing assembly.

As an example, a computing device may include one or more tool access panel latches. For example, consider one or more tool access panel latches that can be released responsive to rotation of a display housing assembly to a predefined open angle with respect to a keyboard housing assembly. In such an example, the predefined open angle may be approximately 180 degrees. As explained, a latch may include features that interact where latching and unlatching may be performed at a predefined open angle (e.g., consider an angle of approximately 180 degrees).

As an example, one or more tool access panels may include one or more notches. For example, in FIG. 4, the release features 730-1 and 730-2 may be notches. As an example, one or more notches may be accessibly exposed responsive to rotation of the display housing assembly to a predefined open angle with respect to the keyboard housing assembly where, for example, the predefined open angle is approximately 180 degrees. As explained, upon rotation to a predefined open angle, one or more features (e.g., notches, latch features, etc.) may become readily accessible for opening of a tool access panel.

As an example, a computing device may include a display housing assembly and a hinge assembly that are a field replaceable unit (FRU). For example, a display housing assembly may include a hinge assembly (e.g., or hinge assemblies) that are coupled together to form an FRU where the FRU may be joined to a keyboard housing assembly via the hinge assembly (e.g., or hinge assemblies). As an example, a display housing assembly may include a camera and a microphone, for example, along with one or more hinge assemblies.

As an example, a method can include providing a clamshell computing device in an open orientation to at least a predefined open angle via a hinge assembly that rotatably couples a display housing assembly and a keyboard housing assembly of the clamshell computing device; opening one or more tool access panels for tool-based access to one or more fasteners of the hinge assembly; and releasing the display housing assembly from the keyboard housing assembly upon tool-based loosening of the one or more fasteners. In such an example, the method may include attaching a replacement display housing assembly to the keyboard housing assembly. In such an example, the method may include, after the attaching, closing the one or more tool access panels.

As an example, a computing device can include a display housing assembly that includes components and component cables; a keyboard housing assembly that includes a processor, memory accessible to the processor, a keyboard, a keyboard side, a base side opposite the keyboard side, cable connector interfaces, and one or more covers disposed on the keyboard side and positionable for access to one or more of the cable connector interfaces; and a hinge assembly that rotatably couples the display housing assembly to the keyboard housing assembly. In such an example, the cable connector interfaces may be part of the keyboard housing assembly, which may be directly wired to one or more types of circuitry. For example, consider a system board, a WLAN card, etc., which may be included in the keyboard housing assembly where one or more wires and/or printed circuits may electrically couple one or more connector interfaces to the system board, the WLAN card, etc. As an example, one or more jumpers (e.g., jumper wires, jumper cables, etc.) may be included in a keyboard housing assembly that may couple a connector to another connector and/or a connector to a board, a card, etc.

As an example, a computing device can include a display housing assembly that includes components that include a display panel, where one or more component cables include a display panel cable, and where one or more cable connector interfaces accessible via at least one of one or more covers include a display panel cable connector interface.

As an example, components of a display housing assembly may include an antenna, where component cables may include an antenna cable, and where one or more cable connector interfaces accessible via at least one of one or more covers may include an antenna cable connector interface.

As an example, components of a display housing assembly may include a camera, where component cables may include a camera cable, and where one or more cable connector interfaces accessible via at least one of one or more covers may include a camera cable connector interface.

As an example, components of a display housing assembly may include a microphone, where component cables may include a microphone cable, and where one or more cable connector interfaces accessible via at least one of one or more covers may include a microphone cable connector interface.

As an example, at least one of one or more covers of a computing device may be positionable for access to one or more fasteners disposed in a keyboard housing assembly that couple at least a portion of a hinge assembly to the keyboard housing assembly.

As an example, a computing device may include a single cover or may include one or more covers. As an example, a single cover may be positionable for access to one or more fasteners disposed in a keyboard housing assembly that couple at least a portion of a hinge assembly to the keyboard housing assembly. In such an example, the at least a portion of the hinge assembly may include at least one hinge leaf. As an example, a hinge assembly may include a pair of hinges where each of the pair of hinges includes a display housing assembly side hinge leaf and a keyboard housing assembly side hinge leaf.

As an example, at least one of one or more covers of a computing device may be positionable for access to one or more fasteners disposed in a display housing assembly that couple at least a portion of a hinge assembly to the display housing assembly. In such an example, the at least a portion of the hinge assembly may include at least one hinge leaf. As an example, a hinge assembly may include a pair of hinges where each of the pair of hinges includes a display housing assembly side hinge leaf and a keyboard housing assembly side hinge leaf.

As an example, one or more covers of a computing device may be positionable only in an open orientation of a display housing assembly with respect to a keyboard housing assembly of the computing device.

As an example, one or more covers of a computing device may be positionable only in an open orientation of a display housing assembly with respect to a keyboard housing assembly of the computing device where, for example, the open orientation forms an open angle that is equal to or greater than a predefined open angle. In such an example, consider the predefined open angle as being approximately 180 degrees.

As an example, a keyboard side of a keyboard housing assembly may be formed in part by a keyboard side shell, where a base side may be formed in part by a base side shell. In such an example, a display housing assembly may be detachable from the keyboard housing assembly without decoupling the keyboard side shell from the base side shell.

As an example, a method can include providing a clamshell computing device in an open orientation to at least a predefined open angle via a hinge assembly that rotatably couples a display housing assembly and a keyboard housing assembly of the clamshell computing device; opening one or more covers on a keyboard side of the keyboard housing assembly for access to cable connector interfaces for cables of the display housing assembly; and separating the display housing assembly from the keyboard housing assembly upon disconnecting the cables from the cable connector interfaces. In such an example, the method may include, prior to the separating, decoupling a portion of the hinge assembly from the keyboard housing assembly and/or the method may include, prior to the separating, decoupling a portion of the hinge assembly from the display housing assembly.

As an example, a computer program product can include instructions to instruct a computing device, a computing system, etc., to perform one or more methods.

The term "circuit" or "circuitry" is used in the summary, description, and/or claims. As is well known in the art, the term "circuitry" includes all levels of available integration (e.g., from discrete logic circuits to the highest level of circuit integration such as VLSI, and includes programmable logic components programmed to perform the functions of an embodiment as well as general-purpose or special-purpose processors programmed with instructions to perform those functions) that includes at least one physical component such as at least one piece of hardware. A processor can be circuitry. Memory can be circuitry. Circuitry may be processor-based, processor accessible, operatively coupled to a processor, etc. Circuitry may optionally rely on one or more computer-readable media that includes computer-executable instructions. As described herein, a computer-readable medium may be a storage device (e.g., a memory chip, a memory card, a storage disk, etc.) and referred to as a computer-readable storage medium, which is non-transitory and not a signal or a carrier wave.

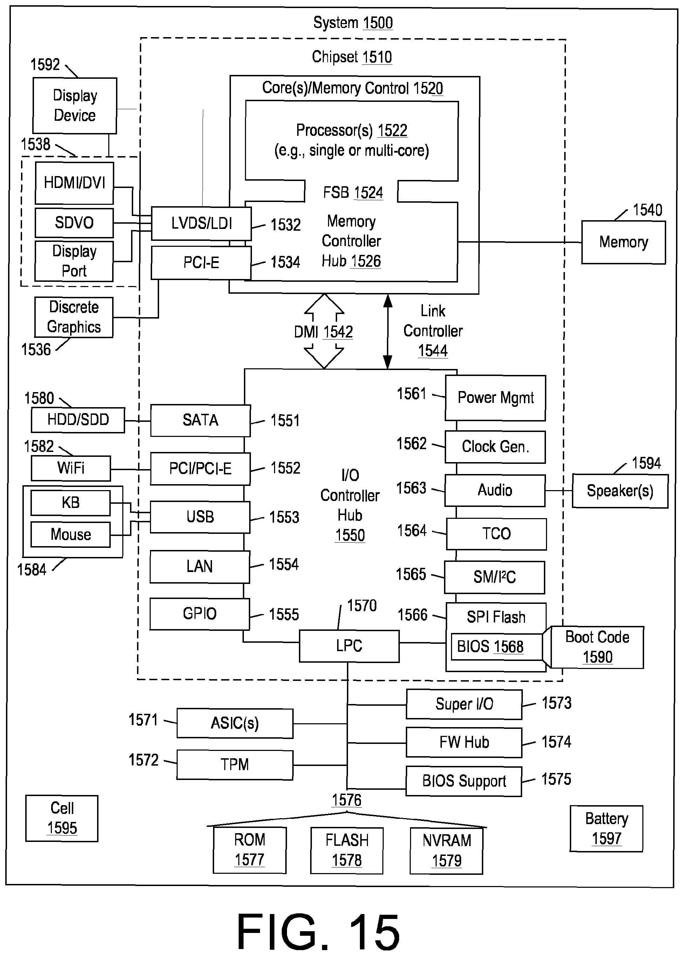

While various examples of circuits or circuitry have been discussed, FIG. 15 depicts a block diagram of an illustrative computer system 1500. The system 1500 may be a computer system, such as one of the THINKCENTER or THINKPAD series of personal computers sold by Lenovo (US) Inc. of Morrisville, NC, or a workstation computer system, such as the THINKSTATION, which are sold by Lenovo (US) Inc. of Morrisville, NC; however, as apparent from the description herein, a system or other machine may include other features or only some of the features of the system 1500.

As shown in FIG. 15, the system 1500 includes a so-called chipset 1510. A chipset refers to a group of integrated circuits, or chips, that are designed (e.g., configured) to work together. Chipsets are usually marketed as a single product (e.g., consider chipsets marketed under the brands INTEL, AMD, etc.).

In the example of FIG. 15, the chipset 1510 has a particular architecture, which may vary to some extent depending on brand or manufacturer. The architecture of the chipset 1510 includes a core and memory control group 1520 and an I/O controller hub 1550 that exchange information (e.g., data, signals, commands, etc.) via, for example, a direct management interface or direct media interface (DMI) 1542 or a link controller 1544. In the example of FIG. 15, the DMI 1542 is a chip-to-chip interface (sometimes referred to as being a link between a "northbridge" and a "southbridge").

The core and memory control group 1520 include one or more processors 1522 (e.g., single core or multi-core) and a memory controller hub 1526 that exchange information via a front side bus (FSB) 1524. As described herein, various components of the core and memory control group 1520 may be integrated onto a single processor die, for example, to make a chip that supplants the conventional "northbridge" style architecture.

The memory controller hub 1526 interfaces with memory 1540. For example, the memory controller hub 1526 may provide support for DDR SDRAM memory (e.g., DDR, DDR2, DDR3, etc.). In general, the memory 1540 is a type of random-access memory (RAM). It is often referred to as "system memory".

The memory controller hub 1526 further includes a low-voltage differential signaling interface (LVDS) 1532. The LVDS 1532 may be a so-called LVDS Display Interface (LDI) for support of a display device 1592 (e.g., a CRT, a flat panel, a projector, etc.). A block 1538 includes some examples of technologies that may be supported via the LVDS interface 1532 (e.g., serial digital video, HDMI/DVI, display port). The memory controller hub 1526 also includes one or more PCI-express interfaces (PCI-E) 1534, for example, for support of discrete graphics 1536. Discrete graphics using a PCI-E interface has become an alternative approach to an accelerated graphics port (AGP). For example, the memory controller hub 1526 may include a 16-lane (x16) PCI-E port for an external PCI-E-based graphics card. A system may include AGP or PCI-E for support of graphics. As described herein, a display may be a sensor display (e.g., configured for receipt of input using a stylus, a finger, etc.). As described herein, a sensor display may rely on resistive sensing, optical sensing, or other type of sensing.

The I/O hub controller 1550 includes a variety of interfaces. The example of FIG. 15 includes a SATA interface 1551, one or more PCI-E interfaces 1552 (optionally one or more legacy PCI interfaces), one or more USB interfaces 1553, a LAN interface 1554 (more generally a network interface), a general purpose I/O interface (GPIO) 1555, a low-pin count (LPC) interface 1570, a power management interface 1561, a clock generator interface 1562, an audio interface 1563 (e.g., for speakers 1594), a total cost of operation (TCO) interface 1564, a system management bus interface (e.g., a multi-master serial computer bus interface) 1565, and a serial peripheral flash memory/controller interface (SPI Flash) 1566, which, in the example of FIG. 15, includes BIOS 1568 and boot code 1590. With respect to network connections, the I/O hub controller 1550 may include integrated gigabit Ethernet controller lines multiplexed with a PCI-E interface port. Other network features may operate independent of a PCI-E interface.

The interfaces of the I/O hub controller 1550 provide for communication with various devices, networks, etc. For example, the SATA interface 1551 provides for reading, writing or reading and writing information on one or more drives 1580 such as HDDs, SDDs or a combination thereof. The I/O hub controller 1550 may also include an advanced host controller interface (AHCl) to support one or more drives 1580. The PCI-E interface 1552 allows for wireless connections 1582 to devices, networks, etc. The USB interface 1553 provides for input devices 1584 such as keyboards (KB), one or more optical sensors, mice and various other devices (e.g., microphones, cameras, phones, storage, media players, etc.). On or more other types of sensors may optionally rely on the USB interface 1553 or another interface (e.g., I²C, etc.). As to microphones, the system 1500 of FIG. 15 may include hardware (e.g., audio card) appropriately configured for receipt of sound (e.g., user voice, ambient sound, etc.).

In the example of FIG. 15, the LPC interface 1570 provides for use of one or more ASICs 1571, a trusted platform module (TPM) 1572, a super I/O 1573, a firmware hub 1574, BIOS support 1575 as well as various types of memory 1576 such as ROM 1577, Flash 1578, and non-volatile RAM (NVRAM) 1579. With respect to the TPM 1572, this module may be in the form of a chip that can be used to authenticate software and hardware devices. For example, a TPM may be capable of performing platform authentication and may be used to verify that a system seeking access is the expected system.

The system 1500, upon power on, may be configured to execute boot code 1590 for the BIOS 1568, as stored within the SPI Flash 1566, and thereafter processes data under the control of one or more operating systems and application software (e.g., stored in system memory 1540). An operating system may be stored in any of a variety of locations and accessed, for example, according to instructions of the BIOS 1568. Again, as described herein, a satellite, a base, a server or other machine may include fewer or more features than shown in the system 1500 of FIG. 15. Further, the system 1500 of FIG. 15 is shown as optionally include cell phone circuitry 1595, which may include GSM, CDMA, etc., types of circuitry configured for coordinated operation with one or more of the other features of the system 1500. Also shown in FIG. 15 is battery circuitry 1597, which may provide one or more battery, power, etc., associated features (e.g., optionally to instruct one or more other components of the system 1500). As an example, a SMBus may be operable via a LPC (see, e.g., the LPC interface 1570), via an I²C interface (see, e.g., the SM/I²C interface 1565), etc.

Although examples of methods, devices, systems, etc., have been described in language specific to structural features and/or methodological acts, it is to be understood that the subject matter defined in the appended claims is not necessarily limited to the specific features or acts described. Rather, the specific features and acts are disclosed as examples of forms of implementing the claimed methods, devices, systems, etc.

Embodiments of the present disclosure may be described as set out in the following clauses:

1. A computing device comprising: a processor; memory accessible to the processor; a display housing assembly that comprises a display panel and display housing hinge mount features; a keyboard housing assembly that comprises a keyboard, keyboard housing hinge mount features, and one or more tool access panels; and a hinge assembly that rotatably couples the display housing assembly and the keyboard housing assembly via the display housing hinge mount features, the keyboard housing hinge mount features, and one or more fasteners, wherein the display housing assembly is attachable to and detachable from the keyboard housing assembly via opening of the one or more tool access panels for tool-based access to and operation of the one or more fasteners.

2. The computing device of clause 1, wherein the hinge assembly comprises a first hinge and a second hinge, and wherein the display housing hinge mount features comprise a first set of hinge mount features for the first hinge and a second set of hinge mount features for the second hinge.

3. The computing device of clause 2, wherein the one or more tool access panels comprise a single tool access panel that covers the first set of hinge mount features and the second set of hinge mount features.

4. The computing device of clause 2, wherein the one or more tool access panels comprise a first tool access panel that covers the first set of hinge mount features and a second tool access panel that covers the second set of hinge mount features.

5. The computing device of clause 1, wherein the keyboard housing assembly comprises a front edge and a back edge and wherein the one or more tool access panels are located adjacent to the back edge.

6. The computing device of clause 1, wherein the keyboard housing assembly comprises a keyboard side and a base side and wherein the one or more tool access panels are located on the keyboard side.

7. The computing device of clause 6, wherein the keyboard housing assembly comprises a front edge and a back edge and wherein the one or more tool access panels are located adjacent to the back edge.

8. The computing device of clause 1, wherein the one or more tool access panels are transitionable to an open position in a substantially 180-degree orientation of the display housing assembly to the keyboard housing assembly.

9. The computing device of clause 8, wherein the one or more tool access panels are only transitionable to the open position in the substantially 180-degree orientation of the display housing assembly to the keyboard housing assembly.

10. The computing device of clause 1, comprising one or more tool access panel latches.

11. The computing device of clause 10, wherein the one or more tool access panel latches are released responsive to rotation of the display housing assembly to a predefined open angle with respect to the keyboard housing assembly.

12. The computing device of clause 11, wherein the predefined open angle is approximately 180 degrees.

13. The computing device of clause 1, wherein the one or more tool access panels comprise one or more notches.

14. The computing device of clause 13, wherein the one or more notches are accessibly exposed responsive to rotation of the display housing assembly to a predefined open angle with respect to the keyboard housing assembly.

15. The computing device of clause 14, wherein the predefined open angle is approximately 180 degrees.

16. The computing device of clause 1, wherein the display housing assembly and the hinge assembly are a field replaceable unit (FRU).

17. The computing device of clause 16, wherein the display housing assembly comprises a camera and a microphone.

18. A method comprising: providing a clamshell computing device in an open orientation to at least a predefined open angle via a hinge assembly that rotatably couples a display housing assembly and a keyboard housing assembly of the clamshell computing device; opening one or more tool access panels for tool-based access to one or more fasteners of the hinge assembly; and releasing the display housing assembly from the keyboard housing assembly upon tool-based loosening of the one or more fasteners.

19. The method of clause 18, comprising attaching a replacement display housing assembly to the keyboard housing assembly.

20. The method of clause 19, after the attaching, closing the one or more tool access panels.

## Claims

1. A computing device comprising:
a processor;
memory accessible to the processor;
a display housing assembly that comprises a display panel and display housing hinge mount features;
a keyboard housing assembly that comprises a keyboard, keyboard housing hinge mount features, and one or more tool access panels; and
a hinge assembly arranged to rotatably couple the display housing assembly and the keyboard housing assembly via the display housing hinge mount features, the keyboard housing hinge mount features, and one or more fasteners, wherein the display housing assembly is attachable to and detachable from the keyboard housing assembly via opening of the one or more tool access panels for tool-based access to and operation of the one or more fasteners.

2. The computing device of claim 1, wherein the hinge assembly comprises a first hinge and a second hinge, and wherein the display housing hinge mount features comprise a first set of hinge mount features for the first hinge and a second set of hinge mount features for the second hinge.

3. The computing device of claim 2, wherein the one or more tool access panels comprise a single tool access panel that covers the first set of hinge mount features and the second set of hinge mount features.

4. The computing device of claim 2, wherein the one or more tool access panels comprise a first tool access panel arranged to cover the first set of hinge mount features and a second tool access panel that covers the second set of hinge mount features.

5. The computing device of any preceding claim, wherein the keyboard housing assembly comprises a front edge and a back edge and wherein the one or more tool access panels are located adjacent to the back edge.

6. The computing device of any preceding claim, wherein the keyboard housing assembly comprises a keyboard side and a base side and wherein the one or more tool access panels are located on the keyboard side.

7. The computing device of claim 6, wherein the keyboard housing assembly comprises a front edge and a back edge and wherein the one or more tool access panels are located adjacent to the back edge.

8. The computing device of any preceding claim, wherein the one or more tool access panels are transitionable to an open position in a substantially 180-degree orientation of the display housing assembly to the keyboard housing assembly, and optionally wherein the one or more tool access panels are only transitionable to the open position in the substantially 180-degree orientation of the display housing assembly to the keyboard housing assembly.

9. The computing device of any preceding claim, comprising one or more tool access panel latches.

10. The computing device of claim 9, wherein the one or more tool access panel latches are releasable responsive to rotation of the display housing assembly to a predefined open angle with respect to the keyboard housing assembly, and optionally wherein the predefined open angle is approximately 180 degrees.

11. The computing device of any preceding claim, wherein the one or more tool access panels comprise one or more notches.

12. The computing device of claim 11, wherein the one or more notches are accessibly exposable responsive to rotation of the display housing assembly to a predefined open angle with respect to the keyboard housing assembly, and optionally wherein the predefined open angle is approximately 180 degrees.

13. The computing device of any preceding claim, wherein the display housing assembly and the hinge assembly are a field replaceable unit (FRU), and optionally wherein the display housing assembly comprises a camera and a microphone.

14. A method comprising:
providing a clamshell computing device in an open orientation to at least a predefined open angle via a hinge assembly that rotatably couples a display housing assembly and a keyboard housing assembly of the clamshell computing device;
opening one or more tool access panels for tool-based access to one or more fasteners of the hinge assembly; and
releasing the display housing assembly from the keyboard housing assembly upon tool-based loosening of the one or more fasteners.

15. The method of claim 14, comprising attaching a replacement display housing assembly to the keyboard housing assembly, and optionally, after the attaching, closing the one or more tool access panels.
